(19) Europäisches Patentamt
European Patent Office
Office européen des brevets

(11) EP 1 273 607 A1

(12) EUROPEAN PATENT APPLICATION
published in accordance with Art. 158(3) EPC

(43) Date of publication:
08.01.2003 Bulletin 2003/02

(21) Application number: 00913101.2

(22) Date of filing: 04.04.2000

(51) Int Cl.⁷: C08G 18/65, D01F 6/70

(86) International application number:
PCT/JP00/02178

(87) International publication number:
WO 01/074923 (11.10.2001 Gazette 2001/41)

(84) Designated Contracting States:
AT BE CH CY DE DK ES FI FR GB GR IE IT LI LU MC NL PT SE
Designated Extension States:
AL LT LV MK RO SI

(71) Applicant: BATTELLE MEMORIAL INSTITUTE
Columbus Ohio 43201-2693 (US)

(72) Inventors:
- MASUI, Takashi, Toyo Boseki Kabushiki Kaisha
Ohtsu-shi, Shiga 520-0292 (JP)
- ISHIMARU, Futoshi,
Toyo Boseki Kabushiki Kaisha
Tsuruga-shi, Fukui 914 -8550 (JP)

(74) Representative:
Bunke, Holger, Dr.rer.nat. Dipl.-Chem.
Prinz & Partner GbR
Manzingerweg 7
81241 München (DE)

# (54) POLYURETHANE AND ELASTIC FIBER OBTAINED THEREFROM

(57) The polyurethane of the present invention comprises a high molecular weight polyol, an organic polyisocyanate, and a chain extender, wherein one component of the chain extender comprises an isocyanurate compound having three specified functional groups and having aromatic hydroxyl groups and/or benzylic hydroxyl groups. The polyurethane of the present invention displays superior elastic recovery and reversible dissociation and bonding, beyond a certain temperature, of urethane bonds forming crosslinked points. Consequently, it is possible to produce from this polyurethane an elastic fiber which has a high heat setting rate above a certain temperature and superior elastic recovery after a heat setting step which is as superior as the elastic recovery before the heat setting step.

EP 1 273 607 A1

## Description

### TECHNICAL FIELD

The present invention relates to a polyurethane characterized by superior elastic recovery and reversible dissociation and bonding, beyond a certain temperature, of urethane bonds forming crosslinked points. In addition, the present invention relates to an elastic fiber obtained from this polyurethane, which shows, when woven into a cloth, or the like, a high heat setting rate above a certain temperature and superior elastic recovery after a heat setting step, which is as superior as the elastic recovery before the heat setting step.

### BACKGROUND ART

Conventionally, in the production of polyurethane, and particularly in the production of polyurethane for polyurethane elastic fiber, a high molecular weight diol, an organic diisocyanate, and a low molecular weight diol are frequently used. However, polyurethane produced therefrom does not necessarily show satisfactory elastic recovery. In particular, in the field of elastic fibers, when elastic fiber produced from this type of polyurethane is woven into a cloth and passed through a heat setting step, it characteristically shows a high heat setting rate, but the elastic recovery of the polyurethane elastic fiber after the setting is unsatisfactory.

As a material for polyurethane elastic fiber, polyurethane urea in which a low molecular weight diamine is used instead of a low molecular weight diol has been widely used. Since polyurethane urea has urea bonds having strong hydrogen bonding capability, it shows high heat stability and highly satisfactory elastic recovery after a heat setting step, to almost the same level as before the heat setting step, but it has the problem of having a low heat setting rate.

In other words, using conventional techniques, it has not been possible to obtain an elastic fiber showing a high heat setting rate and superior elastic recovery, particularly after a heat setting step. This is because polyurethane having such characteristics has not been obtained so far.

While not having direct bearing on polyurethane, a rubber crosslinked by vulcanization and the like has, due to the chemical crosslinking, superior heat stability and superior elastic recovery. However, the forming of such a chemically crosslinked polymer into an article, and particularly into an elastic fiber, is extremely difficult, and from the point of view of heat setting, they show a very low heat setting rate.

It is therefore an object of the present invention to provide a polyurethane from a high molecular weight polyol, an organic polyisocyanate, and a low molecular weight polyol, which has superior elastic recovery of the same level as chemically crosslinked rubber, and a polyurethane elastic fiber obtained therefrom, which has a high heat setting rate above a certain temperature and has superior elastic recovery even after a heat setting step of the same level as before the heat setting step.

### DISCLOSURE OF INVENTION

The present inventors have conducted intensive studies in an attempt to achieve the above-mentioned objects and, as a result, have completed the present invention. In more detail, the present invention is as follows.

Accordingly, the present invention provides:

(A) a polyurethane comprising a high molecular weight polyol, an organic polyisocyanate, and a chain extender, wherein one component of the chain extender comprises at least one compound of an isocyanurate compound represented by the following Formula (1):

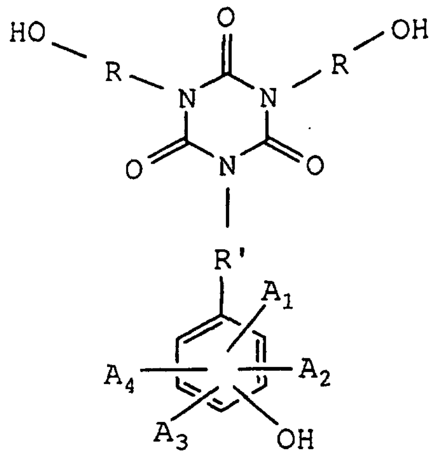

(1)

(wherein R may be the same or different and each is a divalent hydrocarbon group, a divalent hydrocarbon halide group, or a group in which at least two hydrocarbon groups being either the same or different are bonded by a bond selected from an ether bond, an ester bond, an amide bond, a urethane bond, and a urea bond; R' is a direct bond, a divalent hydrocarbon group, a divalent hydrocarbon halide group, or a group in which at least two hydrocarbon groups being either the same or different are bonded by a bond selected from an ether bond, an ester bond, an amide bond, a urethane bond, and a urea bond; $A_1$, $A_2$, $A_3$ and $A_4$ may be the same or different and each is a hydrogen atom, hydrocarbon group having not more than 6 carbon atoms, an alkoxyl group, or a halogen atom),

or an isocyanurate compound represented by the following Formula (2):

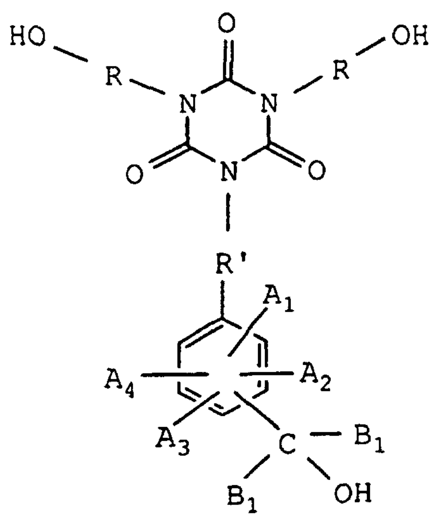

(2)

(wherein R may be the same or different and each is a divalent hydrocarbon group, a divalent hydrocarbon halide group, or a group in which at least two hydrocarbon groups being either the same or different are bonded by a bond selected from an ether bond, an ester bond, an amide bond, a urethane bond, and a urea bond; R' is a direct bond, a divalent hydrocarbon group, a divalent hydrocarbon halide group, or a group in which at least two hydrocarbon groups being the same or different are bonded by a bond selected from an ether bond, an ester bond, an amide bond, a urethane bond, and a urea bond; $A_1$, $A_2$, $A_3$ and $A_4$ may be the same or different and each is a hydrogen atom, a hydrocarbon having not more than 6 carbon atoms, an alkoxyl group, or a halogen atom; and $B_1$ and $B_2$ may be the same or different and each is a hydrogen atom, a hydrocarbon having not more than 6 carbon atoms, or a halogen).

(B) In the polyurethane described in (A) above, one component of the chain extender may be an isocyanurate compound represented by the above-mentioned Formula (1), or an isocyanurate compound represented by the above-mentioned Formula (2).

(C) In the polyurethane described in (A) above, the proportion of the urethane bonds of at least one type from

urethane bonds formed by a reaction of an isocyanato group and an aromatic hydroxyl group of an isocyanurate compound represented by the above-mentioned Formula (1), and urethane bonds formed by a reaction of an isocyanato group and a benzylic hydroxyl group of an isocyanurate compound represented by the above-mentioned Formula (2) is 0.1 to 25% of the total urethane bonds.

(D) In the polyurethane described in (B) above, the proportion of the urethane bonds formed by a reaction of an isocyanato group and an aromatic hydroxyl group of an isocyanurate compound represented by the above-mentioned Formula (1) or urethane bonds formed by a reaction of an isocyanato group and a benzylic hydroxyl group of an isocyanurate compound represented by the above-mentioned Formula (2) is 0.1 to 25% of the total urethane bonds.

The present invention also provides:

(E) An elastic fiber produced from a polyurethane described in any one of (A) to (D) above.

(F) The elastic fiber described in (E) above may be produced by melt spinning.

The present invention is explained in more detail below.

The high molecular weight polyol used in the present invention is exemplified by polyether polyol represented by polytetramethylene ether glycol, polyester polyol represented by polybutylene adipate, polycaprolactone polyol, polyester polycarbonate polyol such as the reaction product of polyester glycol (such as polycaprolactone) and alkylene carbonate, one obtained by reacting ethylene carbonate with a polyhydric alcohol (such as ethylene glycol, propylene glycol, butylene glycol, and neopentyl glycol) and then reacting the resulting reaction mixture with organic dicarboxylic acid (such as adipic acid, azelaic acid, and sebacic acid), and polycarbonate polyol obtained by ester exchange reaction of polyhydroxyl compound (such as 1,4-butanediol, 1,6-hexanediol, 2,2-dimethyl-1,3-propanediol, and 1,8-octanediol) and aryl carbonate (such as diphenylcarbonate). The above-mentioned high molecular weight polyols may be used alone or in combination.

The organic polyisocyanate used in the present invention may be a compound having two or more isocyanate groups, for example, aromatic diisocyanate (such as 4,4'-diphenylmethane diisocyanate, 1,5-naphthalene diisocyanate, 1,4-phenylene diisocyanate, 2,4-tolylene diisocyanate, and 2,6-tolylene diisocyanate), benzylic diisocyanate (such as m-xylylene diisocyanate, and p-xylylene diisocyanate), aliphatic diisocyanate (such as hexamethylene diisocyanate), and alicyclic diisocyanate (such as 1,4-cyclohexane diisocyanate, 4,4'-dicyclohexylmethane diisocyanate, and isophorone diisocyanate), and the like can be mentioned. These may be used alone or in combination.

One component of the chain extender used in the present invention is at least one isocyanurate compound from isocyanurate compounds represented by the above-mentioned Formula (1), and isocyanurate compounds represented by the above-mentioned Formula (2), and is preferably an isocyanurate compound represented by the above-mentioned Formula (1), or an isocyanurate compound represented by the above-mentioned Formula (2).

In the above-mentioned Formula (1) and Formula (2), as the divalent hydrocarbon group of R, for example, alkylene groups such as ethylene, propylene, and trimethylene can be mentioned, and of these ethylene is preferable. As the divalent hydrocarbon halogen of R, for example, halogenated alkylene groups such as chloroethylene and bromoethylene can be mentioned, and of these, chloroethylene is preferable. As the group of R in which at least two hydrocarbon groups which are either the same or different are bonded by a bond selected from an ether bond, an ester bond, an amide bond, a urethane bond, and a urea bond, for example, groups in which two alkylene groups are bonded by a bond selected from an ether bond, an ester bond, an amid bond, a urethane bond, and a urea bond can be mentioned. Specific examples are ethoxyphenyl($-Ph-O-CH_2-CH_2-$, $-CH_2-CH_2-O-Ph-$), ethoxycarbonyl ethyl ($-CH_2-CH_2-CO-O-CH_2-CH_2-$, $-CH_2-CH_2-O-CO-CH_2-CH_2-$), and the like, and of these, ethoxyphenyl is preferable. As R, ethylene and ethoxyphenyl are preferable.

In the above-mentioned Formula (1) and Formula (2), as the divalent hydrocarbon of R', for example, alkylene groups such as methylene, ethylene, propylene, and trimethylene can be mentioned, and of these methylene is preferable. As the divalent hydrocarbon halogen of R', for example, halogenated alkylene groups such as chloroethylene and bromoethylene can be mentioned, and of these, chloroethylene is preferable. As the group of R' in which at least two hydrocarbon groups which are either the same or different are bonded by a bond selected from an ether bond, an ester bond, an amide bond, a urethane bond, and a urea bond, for example, groups in which two alkylene groups are bonded by a bond selected from an ether bond, an ester bond, an amid bond, a urethane bond, and a urea bond can be mentioned. Specific examples are ethoxyphenyl($-Ph-O-CH_2-CH_2-$, $-CH_2-CH_2-O-Ph-$), ethoxycarbonyl ethyl ($-CH_2-CH_2-CO-O-CH_2-CH_2-$, $-CH_2-CH_2-O-CO-CH_2-CH_2-$), and the like, and of these, ethoxyphenyl is preferable. As R', a direct bond, and methylene bonds are preferable.

In the above-mentioned Formula (1) and Formula (2), as the hydrocarbon having not more than six carbon atoms of $A_1$, $A_2$, $A_3$, and $A_4$, for example, alkyl groups such as methyl and ethyl, and phenyl groups can be mentioned, and of these, methyl is preferable. As the alkoxyl groups of $A_1$, $A_2$, $A_3$, and $A_4$, for example, alkoxy groups such as

methoxy and ethoxy, and phenoxy groups can be mentioned, and of these, methoxy is preferable. As the halogen atoms of $A_1$, $A_2$, $A_3$, and $A_4$, for example, fluorine atoms, chlorine atoms, bromine atoms, and iodine atoms can be mentioned, and of these, chlorine atoms are preferable. As $A_1$, $A_2$, $A_3$, and $A_4$, hydrogen atoms are preferable.

In the above-mentioned Formula (2), as the hydrocarbon having not more than six carbon atoms of $B_1$ and $B_2$, for example, alkyl groups such as methyl and ethyl, and phenyl groups can be mentioned, and of these, methyl is preferable. As the halogen atoms of $B_1$ and $B_2$, for example, fluorine atoms, chlorine atoms, bromine atoms, and iodine atoms can be mentioned, and of these, chlorine atoms are preferable. As $B_1$ and $B_2$, hydrogen atoms are preferable.

Specific examples of the isocyanurate compound represented by the above-mentioned Formula (1) are, for example, bis(2-hydroxyethyl)-(4-hydroxyphenyl)isocyanurate (the following Formula (3)), bis(4-(2-hydroxyethoxy)phenyl)-(4-hydroxyphenyl)isocyanurate (the following Formula(4)), and the like.

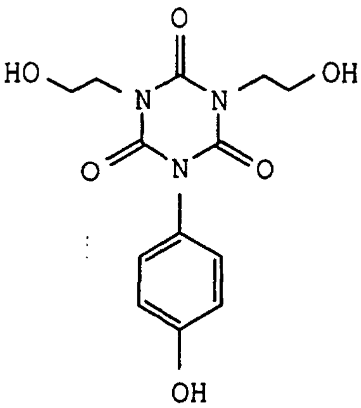

(3)

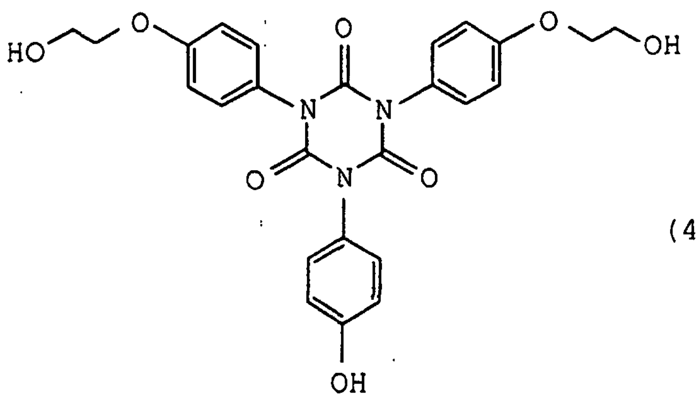

(4)

Specific examples of the isocyanurate compound represented by the above-mentioned Formula (2) are, for example, bis(2-hydroxyethyl)-(4-(hydroxymethyl)phenyl)isocyanurate (the following Formula (5)), bis(2-hydroxyethyl) -(4-(hydroxymethyl)benzyl)isocyanurate (the following Formula (6)), and the like.

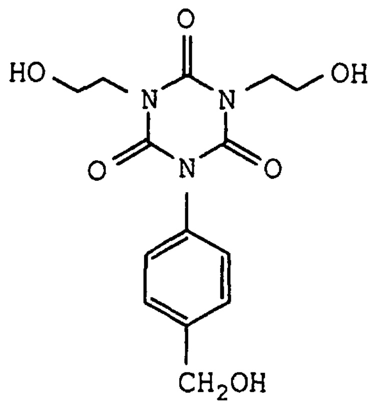

(5)

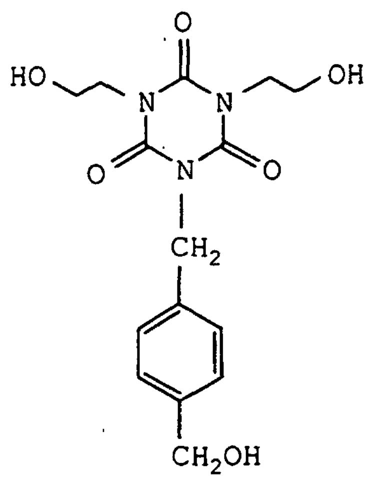

(6)

The isocyanurate compounds represented by the above-mentioned Formula (1) and Formula (2) may be used alone or in combination.

As the chain extender used in the present invention, the above-mentioned isocyanurate compounds represented by the above-mentioned Formula (1) and Formula (2) may be used along with, for example, ethylene glycol, propylene glycol, 1,4-butanediol, 1,6-hexanediol, 1,4-bis(2-hydroxyethoxy)benzene, 1,3-bis(2-hydroxyethoxy)benzene, 1,2-bis(2-hydroxyethoxy)benzene, cyclohexanedimethanol, bis(2-hydroxyethyl) terephthalate, bis(2-hydroxyethyl) isophthalate, bis(2-hydroxyethyl) phthalate, 2,2-bis(4-(2-hydroxyethoxy)phenyl)propane, and the like. The above-mentioned chain extenders may be used alone or in combination.

The ratio of the high molecular weight polyol to the chain extender used in the present invention can vary depending on their molecular weights, the properties desired in the polyurethane, and the like. The amount used of the above-mentioned high molecular weight polyol is preferably 10 to 99.8 mol%, and more preferably 20 to 89.6 mol% of the total amount of polyol. The amount used of the isocyanurate compound being at least one of an isocyanurate compound represented by the above-mentioned Formula (1) and the isocyanurate compound represented by the above-mentioned Formula (2) is preferably 0.2 to 66 mol%, and more preferably 0.4 to 35 mol% of the total amount of polyol. The amount used of chain extender other than these isocyanurate compounds is preferably 0 to 89.8 mol%, and more preferably 10 to 79.6 mol% of the total amount of polyol.

The ratio (NCO/OH) of the number of the isocyanato groups in the organic polyisocyanate to the total number of hydroxyl groups in the above mentioned high molecular weight polyol and the above-mentioned chain extender is 0.80 to 1.25, and more preferably 0.95 to 1.15. When this ratio is too small, the crosslinked structure of the obtained polyurethane becomes insufficient and elastic recovery decreases unpreferably. On the other hand, when this ratio is too large, melt viscosity of the polyurethane becomes smaller, the solidification speed becomes slow, and the surface adhesiveness becomes greater, lowering productivity, which is unpreferable.

Since at least one isocyanurate compound of an isocyanurate compound represented by the above-mentioned Formula (1) and an isocyanurate compound represented by the above-mentioned Formula (2) is used as one component of the polyurethane of the present invention, the polyurethane of the present invention has a crosslinked structure. In general, polyurethane binds soft segments by the cohesive power due to hydrogen bonds of the hard segment and

shows rubber-like properties. However, when crosslinking by strong chemical bonds is combined with the hydrogen bond as the cohesive power of the hard segment, elastic recovery is expected to improve.

In the crosslinked structure of the polyurethane of the present invention, the bonds of the crosslinked points include at least one type of urethane bond from urethane bonds formed by the reaction of isocyanato groups and aromatic hydroxyl groups of isocyanurate compounds represented by the above-mentioned Formula 1, and urethane bonds formed by the reaction of isocyanato groups and benzylic hydroxyl groups of isocyanurate compounds represented by the above-mentioned Formula (2). Preferably the bonds of the crosslinked points include urethane bonds formed by the reaction of isocyanato groups and aromatic hydroxyl groups of isocyanurate compounds represented by the above-mentioned Formula 1, or urethane bonds formed by the reaction of isocyanato groups and benzylic hydroxyl groups of isocyanurate compounds represented by the above-mentioned Formula (2). Consequently, compared with urethane bonds in the main chain, which are formed by aliphatic hydroxyl groups and isocyanato groups, it is possible for reversible dissociation and bonding at relatively lower temperatures. Utilizing this characteristic, the development is possible of a polyurethane elastic fiber having a high heat setting rate and showing superior elastic recovery before and after a heat setting step, which has been unattainable to date using conventional techniques in the field of elastic fibers.

That is, since the polyurethane elastic fiber obtained from such a polyurethane has a crosslinked structure at room temperature, it shows superior elastic recovery. In addition, when the heat setting temperature is set above the temperature at which the urethane bonds (being at least one type of urethane bond from urethane bonds formed by the reaction of isocyanato groups and aromatic hydroxyl groups of isocyanurate compounds represented by the above-mentioned Formula 1, and urethane bonds formed by the reaction of isocyanato groups and benzylic hydroxyl groups of isocyanurate compounds represented by the above-mentioned Formula (2)) forming the bonds at the crosslinked points are dissociated, the urethane bonds of these crosslinks are broken at that heat setting temperature, thereby affording a high heat setting property. When they are cooled again to room temperature, crosslinks are re-formed and the fiber shows superior elastic recovery after the heat setting step.

In the polyurethane of the present invention, the proportion of the urethane bonds being at least one type of urethane bond from urethane bonds formed by the reaction of isocyanato groups and aromatic hydroxyl groups of isocyanurate compounds represented by the above-mentioned Formula 1, and urethane bonds formed by the reaction of isocyanato groups and benzylic hydroxyl groups of isocyanurate compounds represented by the above-mentioned Formula (2) is preferably within the range of 0.1 to 25%, and particularly preferably within the range of 0.2 to 15% of the total urethane bonds. When the proportion of these urethane bonds is less than 0.1%, it is not possible to obtain a polyurethane having sufficient elastic recovery. On the other hand, when the proportion of these urethane bonds exceeds 25%, the forming property of the obtained polyurethane becomes poor and this unpreferable.

The proportion of the urethane bonds being at least one type of urethane bond from urethane bonds formed by the reaction of isocyanato groups and aromatic hydroxyl groups of isocyanurate compounds represented by the above-mentioned Formula 1, and urethane bonds formed by the reaction of isocyanato groups and benzylic hydroxyl groups of isocyanurate compounds represented by the above-mentioned Formula (2) can be calculated, for example, by reacting polyurethane with alcohol, amine, or the like under heating to give a soluble polymer, which is then subjected to NMR analysis, or the like.

The polyurethane of the present invention can be produced by applying a known urethanization technique, such as a melting method, a solution method, or the like. However, in consideration of cost and the working environment, production by a melting method is preferable. Where necessary, multifunctional components such as other triols, triisocyanates, and the like may be simultaneously used.

In addition, when producing the polyurethane, catalysts, activators, defoaming agents, lubricants, stabilizers (e.g., ultraviolet absorbers, yellowing prevention agents, and the like), pigments, antistatic agents, surface treating agents, flame retarders, anti-mold agents, reinforcing agents, and the like, which are conventionally used, may be optionally used in accordance with need.

The polyurethane of the present invention can be used broadly such as in resins, molded articles, films, elastic fibers, and the like. When it is prepared into an elastic fiber, superior elastic recovery and high heat setting rate can be achieved. In addition, the polyurethane elastic fiber of the present invention can be produced by a spinning method such as melt spinning, dry spinning, wet spinning, and the like. From the aspects of cost, homogeneity of the fiber, and the like, production by means of melt spinning is preferable.

The spinning device and spinning conditions for the melt spinning in the present invention may vary depending on the composition of the polyurethane, the size of the desired fiber, polymerization method of the polyurethane, and the like. However, typically, a molten polymer is preferably fed into an extruding type spinning device, and spun at a spinning temperature of 180 - 240°C and a spinning rate of not more than 1000 m/min, and in particular, not more than 600 m/min. The apparent draft ratio is preferably not less than 50, and preferably not less than 100. The spinning tension when the spun filament is wound around a bobbin by a winder is not more than 0.1 g/d, and preferably not more than 0.05 g/d.

The wound filament is preferably heat treated at a temperature near the glass transition temperature of the hard segment under low humidity to allow sufficient progress of the phase separation of the hard segment from the soft segment. By these methods, a polyurethane elastic fiber having a size of about 5 to 100 denier/filament can be generally obtained. The polyurethane elastic fiber of the present invention is suitably of 15 - 100 denier, and preferably 20 - 80 denier. These elastic fibers are used as a covering yarn and a naked yarn.

The present invention is explained in detail in the following by way of Examples, which do not limit the present invention in any way. In the Examples, "part" means "part by weight". Moreover, the elastic recovery rate and heat setting rate were measured by the following methods.

Preparation of Sample for Evaluation

A polyurethane polymer was sandwiched between two Teflon sheets and prepared into an about 0.1 mm thick film by a heat press machine at 215°C. The preparation method of the elastic fiber is disclosed in the following Examples.

Measurement of Elastic Recovery Rate: Film

A sample (a film having a width of 5 mm and a thickness of about 0.1 mm) was held by chucks at a sample length of 50 mm and, using a tensile tester, stretched 300% at a constant speed of 1000%/min. Immediately after stretching, the sample was relaxed at the same speed. The 150% pulling stress in the stretching process and the 150% pulling stress in the relaxing process were measured and used for the calculation by the following formula.

Elastic recovery (%) = (150% pulling stress in relaxing process

/150% pulling stress in stretching process) × 100

The elastic recovery rate after the heat setting step was measured by carrying out a heat treatment on a film in the same manner (heat treatment under 100% stretching) as in the heat setting rate measurement mentioned later, and the elastic recovery rate of the film was measured in the same manner as above.

Measurement of Elastic Recovery Rate: Fiber

A sample (40 denier, monofilament) was held by chucks at a sample length of 50 mm and, using a tensile tester, stretched 300% at a constant speed of 1000%/min. Immediately after stretching, the sample was relaxed at the same speed. The 150% pulling stress in the stretching process and the 150% pulling stress in the relaxing process were measured and used for the calculation by the following formula.

Elastic recovery (%) = (150% pulling stress in relaxing process

/150% pulling stress in stretching process) × 100

The elastic recovery rate after the heat setting step was measured by carrying out a heat treatment on an elastic fiber in the same manner (heat treatment under 100% stretching) as described in the heat setting rate measurement mentioned later, and the elastic recovery rate of the fiber was measured in the same manner as above.

Measurement of Heat Setting Rate: Film

A sample (a film having a width of 2 mm, and a thickness of about 0.1 mm) was held at an initial length of 20 mm, heated at a constant temperature (dry heat) for 10 min under 100% stretching, and the sample length upon relaxing after cooling was measured. The heat setting rate was obtained from the following formula.

Heat setting (%) = {(sample length after heating - initial length)/initial length} × 100

Measurement of Heat Setting Rate: Fiber

A sample (40 denier, monofilament) having an initial length of 22.5 cm was heated at a constant temperature

(dry heat) for 1 min under 100% stretching, and the sample length upon relaxing after cooling was measured. The heat setting rate was obtained from the following formula.

$$\text{Heat setting (\%)}=\{(\text{sample length after heating - initial length})/\text{initial length}\} \times 100$$

Example 1

To polybutylene adipate (abbreviated as PBA, 58.5 parts) having hydroxyl groups at both terminals and a number average molecular weight of 1950 as a high molecular weight polyol, and, as a chain extender, 1,4-butanediol (abbreviated as BD, 4.365 parts) and bis(2-hydroxyethyl)-(4-hydroxyphenyl)isocyanurate (abbreviated as BEPI, 0.4635 parts) was added diphenylmethane diisocyanate (abbreviated as MDI, 20.2 parts) as an organic polyisocyanate to allow polymerization to give polyurethane. A film was obtained therefrom by melt-forming using a heat press machine and subjected to measurement as Example 1. The measurement results of various physical properties are shown in Table 1.

Example 2

The process followed Example 1 except that BD (4.05 parts), BEPI (1.545 parts) and MDI (20.625 parts) were used. A film was obtained by melt-forming in a heat press machine and subjected to measurement as Example 2. The measurement results of various physical properties are shown in Table 1.

Example 3

PBA (58.5 parts) as a high molecular weight polyol, BD (4.365 parts) and BEPI (0.4635 part) as a chain extender, and MDI (19.75 parts) as an organic polyisocyanate were continuously fed into a twin-screw extruder to allow continuous melt-polymerization at 240°C, and thereby a polyurethane having an OH group concentration on calculation of 42.13 meq/kg was obtained. As a result of $^1$H-NMR analysis, the obtained polyurethane was confirmed to contain aromatic hydroxyl groups in an amount almost corresponding to the charged BHPI and in an unreacted state. This polymer was used as Component 1.

Isophorone diisocyanate (abbreviated as IPDI, 0.777 parts) and poly(ε-caprolactone) (abbreviated as PCL, 0.9205 parts) having hydroxyl groups on both terminals and a number average molecular weight of 526 were stirred at 80°C for 60 min to give a compound with isocyanate groups on the terminals, which has an NCO concentration of 2062 meq/kg. This was used as Component 2.

Component 1 and Component 2 were melt-mixed in a kneader at a weight ratio of 48.9 to 1 to make the NCO/OH ratio 1.0 to give a crosslinked polymer. A film obtained by melt-forming using a heat press machine was subjected to measurement as Example 3. The measurement results of various properties are shown in Table 1.

Example 4

The process followed Example 1 except that bis(2-hydroxyethyl)-(4-(hydroxymethyl)phenyl)isocyanurate (abbreviated as BEMPI, 0.4845 parts) was used instead of BEPI (0.4635 parts). A film obtained by melt-forming using a heat press machine was subjected to measurement as Example 4. The measurement results of various properties are shown in Table 1.

Comparative Example 1

PBA (58.5 parts) was used as a high molecular weight polyol and BD (4.5 parts) was used as a chain extender. To this was added MDI (20 parts) as an organic polyisocyanate to allow polymerization to give polyurethane. A film obtained by melt-forming using a heat press machine was subjected to measurement as Comparative Example 1. The measurement results of various properties are shown in Table 1.

Comparative Example 2

PBA (58.5 parts) was used as a high molecular weight polyol, and BD (4.365 parts) and trimethylolpropane (abbreviated as TMP, 0.201 part) were used as a chain extender. To this was added MDI (20.2 parts) as an organic polyisocyanate to allow polymerization to give polyurethane. A film obtained by melt-forming using a heat press machine was subjected to measurement as Comparative Example 2. The measurement results of various properties are shown

in Table 1.

Table 1

| | Ex. 1 | Ex. 2 | Ex. 3 | Ex. 4 | Co. Ex. 1 | Co. Ex. 2 |
|---|---|---|---|---|---|---|
| High molecular weight polyol (relative molar ratio) | PBA (30) | PBA (30) | PBA/PCL (30/1.75) | PBA (30) | PBA (30) | PBA (30) |
| Organic polyisocyanate (relative molar ratio) | MDI (80.8) | MDI (82.5) | MDI/IPDI (79/3.5) | MDI (80.8) | MDI (80) | MDI (80.8) |
| Chain extender (relative molar ratio) | BD/BEPI (48.5/1.5) | BD/BEPI (45/5) | BD/BEPI (48.5/1.5) | BD/BEMPI (48.5/1.5) | BD (50) | BD/TMP (48.5/1.5) |
| Heat setting (%) | | | | | | |
| 120°C | 34 | 30 | 33 | 23 | 42 | 30 |
| 130°C | 77 | 73 | 45 | 35 | 66 | 44 |
| 140°C | 86 | 82 | 56 | 50 | 87 | 52 |
| 145°C | 89 | 85 | 63 | 60 | 90 | 57 |
| 150°C | 94 | 91 | 90 | 88 | 97 | 61 |
| 155°C | 98 | 96 | 96 | 91 | 100 | 65 |
| Elastic recovery (%) | 24 | 29 | 25 | 22 | 12 | 18 |
| Elastic recovery (%) after heat setting (setting temp.) | 22 (130°C) | 24 (130°C) | 24 (150°C) | 19 (150°C) | 5 (130°C) | 9 (150°C) |

Example 5, Comparative Example 3

The polymers obtained in Example 1 and Comparative Example 1 were melt-spun using a single-screw extruder-spinning machine at a spinning temperature of 210°C and a spinning rate of 500 m/min to give elastic fibers (40 denier, monofilament). The fibers were subjected to the measurements as Example 5 and Comparative Example 3, respectively. The respective results are shown in Table 2.

Table 2

| | Example 5 | Comp. Ex. 3 |
|---|---|---|
| Heat setting (%) | | |
| 120°C | 40 | 59 |
| 130°C | 79 | 70 |
| 140°C | 89 | 85 |
| 145°C | 92 | 89 |
| 150°C | 97 | 95 |
| 155°C | 100 | 100 |
| Elastic recovery (%) | 21 | 10 |
| Elastic recovery (%) after heat setting (setting temp.) | 19 (130°C) | 4 (130°C) |

As is evident from Table 1, the polyurethane of Examples 1 to 4 have high elastic recovery rate, and particularly show a small decrease in the elastic recovery rate after a heat treatment that corresponds to a heat setting step. In addition, the polyurethane of Examples 1 to 4 show a high heat setting rate above a certain temperature, which is as high as that of a general polyurethane (Comparative Example 1) which does not have a crosslinked structure. The same can be said with regard to the elastic fibers (Example 3 and Comparative Example 3) of Table 2.

As is clear from the above explanation, the polyurethane of the present invention displays superior elastic recovery and reversible dissociation and bonding, beyond a certain temperature, of urethane bonds forming crosslinked

points. Consequently, it is possible to produce from this urethane an elastic fiber which has a high heat setting rate above a certain temperature and superior elastic recovery after a heat setting step which is as superior as the elastic recovery before the heat setting step.

## Claims

1. A polyurethane comprising a high molecular weight polyol, an organic polyisocyanate, and a chain extender, wherein one component of the chain extender comprises at least one compound of an isocyanurate compound represented by the following formula (1):

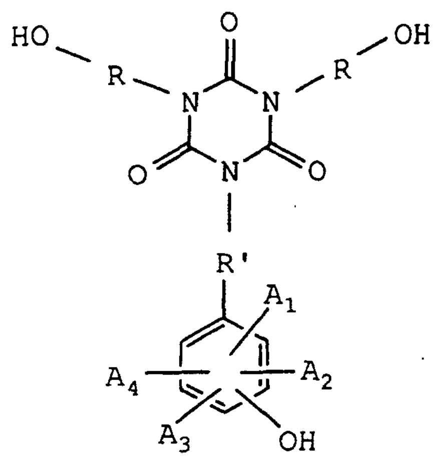

(1)

(wherein R may be the same or different and each is a divalent hydrocarbon group, a divalent hydrocarbon halide group, or a group in which at least two hydrocarbon groups being either the same or different are bonded by a bond selected from an ether bond, an ester bond, an amide bond, a urethane bond, and a urea bond; R' is a direct bond, a divalent hydrocarbon group, a divalent hydrocarbon halide group, or a group in which at least two hydrocarbon groups being either the same or different are bonded by a bond selected from an ether bond, an ester bond, an amide bond, a urethane bond, and urea bond; and $A_1$, $A_2$, $A_3$ and $A_4$ may be the same or different and each is a hydrogen, a hydrocarbon group having not more than 6 carbon atoms, an alkoxy group, or a halogen atom); and

an isocyanurate compound represented by the following Formula (2):

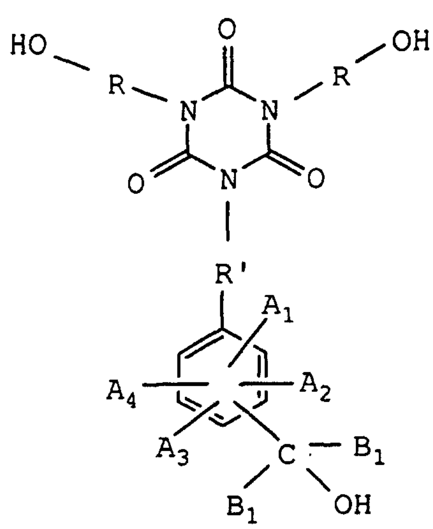

(2)

(wherein R may be the same or different and each is a divalent hydrocarbon group, a divalent hydrocarbon

halide group, or a group in which at least two hydrocarbon groups being either the same or different are bonded by a bond selected from an ether bond, an ester bond, an amide bond, a urethane bond, and a urea bond; R' is a direct bond, a divalent hydrocarbon group, a divalent hydrocarbon halide group, or a group in which at least two hydrocarbon groups being the same or different are bonded by a bond selected from an ether bond, an ester bond, an amide bond, a urethane bond, and a urea bond; $A_1$, $A_2$, $A_3$ and $A_4$ may be the same or different and each is a hydrogen atom, a hydrocarbon having not more than 6 carbon atoms, an alkoxyl group, or a halogen atom; and $B_1$ and $B_2$ may be the same or different and each is a hydrogen atom, a hydrocarbon having not more than 6 carbon atoms, or a halogen).

**2.** A polyurethane according to claim 1, wherein one component of the chain extender may be an isocyanurate compound represented by the above-mentioned Formula (1), or an isocyanurate compound represented by the above-mentioned Formula (2).

**3.** A polyurethane according to claim 2, wherein a proportion of urethane bonds of at least one type from urethane bonds formed by a reaction of an isocyanato group and an aromatic hydroxyl group of an isocyanurate compound represented by the formula (1), and urethane bonds formed by a reaction of an isocyanato group and a benzylic hydroxyl group of an isocyanurate compound represented by the formula (2) is 0.1 to 25% of the total urethane bonds.

**4.** A polyurethane according to claim 2, wherein, the proportion of urethane bonds formed by a reaction of an isocyanato group and an aromatic hydroxyl group of an isocyanurate compound represented by the formula (1), or urethane bonds formed by a reaction of an isocyanato group and a benzylic hydroxyl group of an isocyanurate compound represented by the formula (2) is 0.1 to 25% of the total urethane bonds.

**5.** An elastic fiber produced from a polyurethanes recited in any of claims 1 to 4.

**6.** An elastic fiber according to claim 5 produced by melt spinning.

## INTERNATIONAL SEARCH REPORT

International application No.
PCT/JP00/02178

A. CLASSIFICATION OF SUBJECT MATTER
Int.Cl⁷ C08G18/65, D01F6/70

According to International Patent Classification (IPC) or to both national classification and IPC

B. FIELDS SEARCHED

Minimum documentation searched (classification system followed by classification symbols)
Int.Cl⁷ C08G18/65, D01F6/70

Documentation searched other than minimum documentation to the extent that such documents are included in the fields searched

Electronic data base consulted during the international search (name of data base and, where practicable, search terms used)
CAS

C. DOCUMENTS CONSIDERED TO BE RELEVANT

| Category* | Citation of document, with indication, where appropriate, of the relevant passages | Relevant to claim No. |
|---|---|---|
| E,X | JP, 2000-109535, A (Toyobo Co., Ltd.), 18 April, 2000 (18.04.00), Claims (Family: none) | 1-6 |
| A | JP, 47-49837, B1 (Toyobo Co., Ltd.), 14 December, 1972 (14.12.72), Claims (Family: none) | 1-6 |
| A | JP, 44-20247, B1 (Nisshinbo Industries, Inc.), 01 September, 1969 (01.09.69), Claims (Family: none) | 1-6 |
| A | JP, 54-11323, A (Teijin Limited), 27 January, 1979 (27.01.79), Claims (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 July, 2000 (18.07.00) | 01 August, 2000 (01.08.00) |
| Name and mailing address of the ISA/ Japanese Patent Office | Authorized officer |
| Facsimile No. | Telephone No. |

Form PCT/ISA/210 (second sheet) (July 1992)